# EUROPÄISCHE PATENTANMELDUNG

(11) **EP 1 018 660 A2**
(43) Veröffentlichungstag der Anmeldung: **12.07.2000**
(21) Anmeldenummer: 99126008.4
(22) Anmeldetag: 27.12.1999
(51) Int. Cl.: G02B 6/42

(54) **Verbindungseinrichtung für die Kopplung eines Lichtwellenleiters mit einem optoelektronischen Wandler**

(30) Priorität: 07.01.1999 DE 19900293
(71) Anmelder: Delphi Technologies, Inc., Troy, MI 48007 (US)
(72) Erfinder: Halbach, Paul Gerhard, 42369 Wuppertal (DE)
(74) Vertreter: Manitz, Finsterwald & Partner

(57) **Zusammenfassung**

Einrichtung zur Verbindung eines Lichtwellenleiters über sein mit einem Anschlußstück (1) versehenes Ende mit einem elektrooptischen oder optoelektrischen Wandler (2), welcher ein Gehäuse (3), eine im Gehäuse eingesetzte, mit einer Seite von außen zugängliche optische Linse (16), eine im Gehäuse (3) angeordnete Einrichtung zur Umwandlung von Licht in elektrische Signale oder umgekehrt und einen elektrischen Signalausgang (5) aufweist, wobei zur Verbesserung der Leistung des Systems, insbesondere zur Verringerung der Dämpfung an der Verbindungsstelle, an das Wandlergehäuse (3) mechanische Verbindungsmittel (8, 12) angeformt sind, durch welche ein Lichtwellenleiter, mit seiner Endfläche der optischen Linse (16) gegenüberliegend, an dem Wandlergehäuse (3) befestigbar ist.

## Beschreibung

Die vorliegende Erfindung betrifft eine Einrichtung zur Verbindung eines Lichtwellenleiters über sein mit einem Anschlußstück versehenes Ende mit einem elektrooptischen oder optoelektrischen Wandler, welcher ein Gehäuse, eine im Gehäuse eingesetzte, mit einer Seite von außen zugängliche optische Linse, eine im Gehäuse angeordnete Einrichtung zur Umwandlung von Licht in elektrische Signale oder umgekehrt und einen elektrischen Signalausgang aufweist.

An ihren Enden müssen Lichtwellenleiter mit einem elektrooptischen oder optoelektrischen Wandler verbunden werden, in welchem die elektrischen Signale in optische Signale bzw. die optischen Signale in elektrische Signale umgewandelt werden. Um eine hohe Leistungsfähigkeit des Systems, insbesondere eine geringe Dämpfung, zu erzielen, muß die Endfläche des Lichtwellenleiters möglichst nahe an die optische Linse des Wandlers herangebracht und in dieser Lage fixiert werden. Dabei soll auch die Toleranz möglichst gering sein.

Der Erfindung liegt die Aufgabe zugrunde, eine Verbindungseinrichtung der eingangs genannten Art anzugeben, die eine hohe Leistung des Systems, insbesondere eine geringe Dämpfung an der Verbindungsstelle zwischen Lichtwellenleiter und Wandler, ermöglicht.

Diese Aufgabe wird dadurch gelöst, daß an das Wandlergehäuse mechanische Verbindungsmittel angeformt sind, durch welche ein Lichtwellenleiter, mit seiner Endfläche der optischen Linse gegenüberliegend, an dem Wandlergehäuse befestigbar ist.

Durch die Anformung der mechanischen Verbindungsmittel an das Wandlergehäuse besteht eine direkte Verbindung zwischen Anschlußstück des Lichtwellenleiters und Wandler. Dadurch werden die Toleranzen verringert. Entsprechend ist die Dämpfung durch die Übergangsstelle gering und die Leistung des Systems erhöht.

Nach einer Ausgestaltung der Erfindung ist am Anschlußstück des Lichtwellenleiters ein der Endfläche benachbarter Endabschnitt vorgesehen, der andererseits durch eine Schulter begrenzt wird, die zwischen dem Endabschnitt und einem daran anschließenden verjüngten Abschnitt des Anschlußstückes vorgesehen ist und die von an dem Wandlergehäuse angebrachten Befestigungsmitteln hintergreifbar ist. Hierdurch wird in konstruktiv unaufwendiger Weise eine sichere Befestigung erreicht.

Nach einer weiteren Ausgestaltung der Erfindung sind als Befestigungsmittel Klauen an das Wandlergehäuse angeformt, die seitlich zur optischen Linse angeordnet sind und vom Gehäuse abstehen. Durch diese Lösung wird ohne zusätzliche Mittel eine sichere Befestigung erreicht.

Zur Erzielung einer einfachen Montage sind die Klauen durch den Endabschnitt des Anschlußstückes elastisch aufweitbar. Die Klauen rasten dadurch automatisch in die Schulter des Anschlußstückes ein und sichern dieses am Wandlergehäuse.

Nach einer weiteren Ausgestaltung der Erfindung ist als Befestigungsmittel ein Bügel vorgesehen, welcher mit seinen beiden Schenkeln jeweils in eine an das Wandlergehäuse angeformte Aufnahme einsetzbar und zum Hintergreifen der Schulter des Anschlußstückes ausgebildet ist. Zusammen mit den am Gehäuse vorgesehenen Aufnahmen bildet der Bügel wiederum eine konstruktiv unaufwendige und sichere Befestigung.

Bevorzugt sind die beiden Schenkel des Bügels gegeneinander elastisch beweglich ausgebildet. Der Bügel rastet dadurch automatisch in der Schulter des Anschlußstückes ein und sichert dieses am Gehäuse.

Nach einer weiteren Ausgestaltung der Erfindung ist die Schulter als schräge Fläche ausgebildet, wobei die Klauen oder die Schenkel des Bügels bei eingesetztem Anschlußstück gegen die schräge Fläche vorgespannt sind. Durch diese Ausgestaltung wird das Anschlußstück gegen die Linse bewegt, wenn die Klauen oder die Schenkel des Bügels an der Schulter zur Anlage kommen. Die Toleranz wird hierdurch weiter reduziert und entsprechend die Leistungsfähigkeit des Systems erhöht, ohne daß zusätzliche Elemente notwendig sind. Insbesondere ist kein zusätzliches Element zum Toleranzausgleich erforderlich. Der Neigungswinkel der Schulter beträgt bevorzugt ca. 45°.

Ausführungsbeispiele der Erfindung sind in der Zeichnung dargestellt und werden nachfolgend beschrieben. Es zeigen, jeweils in schematischer Darstellung:

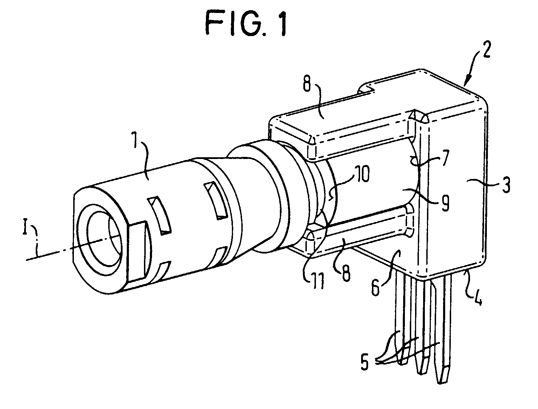

- Fig. 1: eine erste Variante der erfindungsgemäßen Verbindungseinrichtung in perspektivischer Darstellung,
- Fig. 2: eine zweite Variante der erfindungsgemäßen Verbindungseinrichtung in perspektivischer Darstellung, und
- Fig. 3: die Variante von Fig. 2 ohne eingesetztes Anschlußstück, ebenfalls in perspektivischer Darstellung.

Ein nicht dargestellter Lichtwellenleiter ist an seinem Ende mit einem Anschlußstück 1 versehen, welches mit einem elektrooptischen oder einem optoelektrischen Wandler 2 verbunden ist. Der Wandler 2 umfaßt ein Gehäuse 3, in welchem die Wandlereinrichtungen vorgesehen sind. An einer Schmalseite 4 ist das Gehäuse 3 mit elektrischen Anschlußkontakten 5 versehen. An einer Breitseite 6 weist das Gehäuse 3 eine Zutrittsöffnung 7 für das Anschlußstück 1 auf. In der Zugangsöffnung 7 ist eine hier nicht dargestellte optische Linse vorhanden, an welcher die Stirnseite des Anschlußstückes 1 anliegt.

Seitlich der Zugangsöffnung 7 sind an das Gehäuse 3 des Wandlers 2 zwei klauenartige Fortsätze 8 angeformt, die auf der Breitseite 6 des Gehäuses 3 von diesem abstehen. Das Anschlußstück 1 ist mit einem zwischen die Klauen 8 passenden Endabschnitt 9 versehen, welcher auf seiner der Endfläche des Anschlußstückes 1 abgewandten Seite durch eine Schulter 10 begrenzt wird, die zwischen dem Endabschnitt 9 und einem daran anschließenden verjüngten Abschnitt 11 des Anschlußstückes 1 vorgesehen ist. Die Schulter 10 weist zur Längsachse I des Anschlußstückes 1 einen Winkel von ca. 45° auf.

Die Schulter 10 wird von den beiden Klauen 8 des Gehäuses 3 hintergriffen, wobei die Klauen 8 elastisch aufwertbar sind und entsprechende Gegenflächen zur Schulter 10 aufweisen, die derart ausgebildet sind, daß die Klauen 8 gegen die Schulter 10 gespannt sind. Das eingesetzte Anschlußstück 1 wird so durch die federnden Klauen 8 gegen das Gehäuse 3 bewegt. Dadurch wird die Endfläche des Anschlußstückes 1 in engem Kontakt mit der optischen Linse im Gehäuse 3 gehalten und die Toleranz verringert. Insgesamt ergibt sich so eine feste und leistungsfähige Verbindung zwischen dem Lichtwellenleiter und dem Wandler 2.

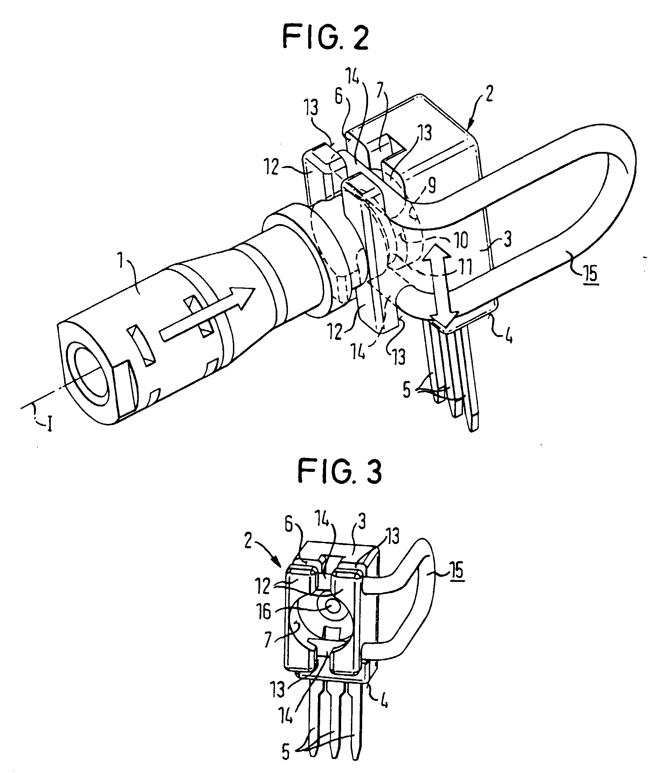

Die in Fig. 2 dargestellte Variante umfaßt ebenfalls ein Anschlußstück 1, welches am Ende eines nicht dargestellten Lichtwellenleiters angeordnet ist, sowie einen elektrooptischen oder einen optoelektrischen Wandler 2. Der Wandler 2 wiederum umfaßt ein Gehäuse 3, welches an einer Schmalseite 4 mit elektrischen Anschlußkontakten 5 versehen ist. Auf einer Breitseite 6 weist das Gehäuse 3 eine Zugangsöffnung 7 zu der optischen Linse auf, die in der Darstellung von Fig. 2 ebensowenig erkennbar ist wie die Wandlungseinrichtungen im Inneren des Gehäuses 3.

Auf dieser Breitseite 6 des Gehäuses 3 sind des weiteren Flansche 12 angeformt, in denen Aufnahmen 13 vorgesehen sind, in welche jeweils ein Schenkel 14 eines Federbügels 15 einsetzbar ist. Die Flansche 12 stehen dabei vom Gehäuse 3 seitlich zu der Zugangsöffnung 7 ab, während die Aufnahmen 13 parallel zur Breitseite 6 jeweils beidseits in die Flansche 12 eingebracht sind. Dementsprechend können die beiden Schenkel 14 des Federbügels 15 beidseits in die Aufnahmen 13 eingreifen und sich gegeneinander parallel zur Breitseite 6 des Gehäuses 3 bewegen.

Das Anschlußstück 1 weist auch bei der zweiten Variante einen Endabschnitt 9 auf, der auf seiner von der Stirnfläche des Anschlußstückes 1 abgewandten Seite durch eine Schulter 10 begrenzt wird, die zwischen dem Endabschnitt 9 und einem daran anschließenden, verjüngten Abschnitt 11 des Anschlußstückes 1 ausgebildet ist. Auch hier weist die Schulter 10 einen Winkel von ca. 45° zur Längsachse 1 des Anschlußstückes 1 auf.

Endabschnitt 9, Schulter 10 und Abschnitt 11 des Anschlußstückes 1 sind so ausgebildet, daß die Schenkel 14 des Federbügels 15 bei eingesetztem Anschlußstück 1 aufgeweitet werden und elastisch gegen die Schulter 11 gespannt sind. Dadurch wird das Anschlußstück 1 wiederum gegen die optische Linse 16 - siehe Fig. 3 - im Gehäuse 3 bewegt und ein festes Anliegen in geringem Abstand und mit geringer Toleranz erreicht. Auch diese Variante zeichnet sich durch gute Leistungsfähigkeit mit geringer Dämpfung an der Übergangsstelle aus.

### Bezugszeichenliste

- 1: Anschlußstück
- 2: Wandler
- 3: Gehäuse
- 4: Schmalseite von 3
- 5: elektrischer Kontakt
- 6: Breitseite von 3
- 7: Zugangsöffnung
- 8: Klaue
- 9: Endabschnitt von 1
- 10: Schulter
- 11: verjüngter Abschnitt von 1
- 12: Flansch
- 13: Aufnahme
- 14: Schenkel
- 15: Federbügel
- 16: optische Linse
- I: Längsachse von 1

## Patentansprüche

1. Einrichtung zur Verbindung eines Lichtwellenleiters über sein mit einem Anschlußstück (1) versehenes Ende mit einem elektrooptischen oder optoelektrischen Wandler (2), welcher ein Gehäuse (3), eine im Gehäuse eingesetzte, mit einer Seite von außen zugängliche optische Linse (16), eine im Gehäuse (3) angeordnete Einrichtung zur Umwandlung von Licht in elektrische Signale oder umgekehrt und einen elektrischen Signalausgang (5) aufweist, dadurch gekennzeichnet, daß an das Wandlergehäuse (3) mechanische Verbindungsmittel (8, 12) angeformt sind, durch welche ein Lichtwellenleiter, mit seiner Endfläche der optischen Linse (16) gegenüberliegend, an dem Wandlergehäuse (3) befestigbar ist.

2. Verbindungseinrichtung nach Anspruch 1, dadurch gekennzeichnet, daß am Anschlußstück (1) des Lichtwellenleiters ein der Endfläche benachbarter Endabschnitt (9) vorgesehen ist, welcher andererseits durch eine Schulter (10) begrenzt wird, die zwischen dem Endabschnitt (9) und einem daran anschließenden, verjüngten Abschnitt (11) des Anschlußstückes (1) vorgesehen ist und die von an dem Wandlergehäuse (3) angebrachten Befestigungsmitteln (8, 14) hintergreifbar ist.

3. Verbindungseinrichtung nach Anspruch 2, dadurch gekennzeichnet, daß als Befestigungsmittel Klauen (8) an das Wandlergehäuse (3) angeformt sind, die seitlich zur optischen Linse angeordnet sind und vom Gehäuse (3) abstehen.

4. Verbindungselement nach Anspruch 3, dadurch gekennzeichnet, daß die Klauen (8) durch den Endabschnitt (9) des Anschlußstückes (1) elastisch aufweitbar sind.

5. Verbindungselement nach Anspruch 2, dadurch gekennzeichnet, daß als Befestigungsmittel ein Bügel (15) vorgesehen ist, welcher mit seinen beiden Schenkeln (14) jeweils in eine an das Wandlergehäuse (3) angeformte Aufnahme (13) einsetzbar und zum Hintergreifen der Schulter (10) des Anschlußstückes (1) ausgebildet ist.

6. Verbindungselement nach Anspruch 5, dadurch gekennzeichnet, daß die beiden Schenkel (14) des Bügels (15) gegeneinander elastisch beweglich sind.

7. Verbindungselement nach einem der Ansprüche 2 bis 6, dadurch gekennzeichnet, daß die Schulter (10) als schräge Fläche ausgebildet ist und daß die Klauen (8) oder die Schenkel (14) des Bügels (15) bei eingesetztem Anschlußstück (1) gegen die schräge Fläche der Schulter (10) gespannt sind.

8. Verbindungselement nach Anspruch 7, dadurch gekennzeichnet, daß die schräge Fläche einen Winkel von ca. 45° zur Längsachse (I) des Anschlußstückes (1) aufweist.
